# EUROPEAN PATENT SPECIFICATION

(11) **EP 4 375 549 B1**
(45) Date of publication and mention of the grant of the patent: **25.06.2025**
(21) Application number: 22275147.1
(22) Date of filing: 22.11.2022
(51) Int. Cl.: F16L 9/00, F16L 43/00

(54) **PIPE AND MANUFACTURING METHOD THEREOF**
ROHR UND VERFAHREN ZU IHRER HERSTELLUNG
TUYAU ET METHODE DE FABRICATION CORRESPONDANTE

(43) Date of publication of application: 29.05.2024
(73) Proprietor: Crompton Technology Group Limited, Oxfordshire, OX16 4XD (GB)
(72) Inventor: FINNEY, Robert Edwin, Banbury (GB); BREMNER-STOKES, Christopher Jan, Banbury (GB)
(74) Representative: Dehns

(56) References cited:
- EP-A2- 3 398 702
- CA-A1- 3 065 263
- JP-U- H0 641 935
- US-A1- 2007 227 610
- US-A1- 2016 131 019
- US-A1- 2017 305 569
- ABDULHAMEED DIANA ET AL: "The Influence of the Bourdon Effect on Pipe Elbow", VOLUME 3: OPERATIONS, MONITORING AND MAINTENANCE; MATERIALS AND JOINING, 26 September 2016 (2016-09-26), pages 1 - 11, XP093031067, DOI: 10.1115/IPC2016-64659

## Description

### Technical Field

The present disclosure relates to pipes for transferring fluids and in particular to pipes with bend portions.

### Background

Most pipes for carrying fluids (e.g. fuel pipes in aircraft) are substantially straight, as straight lines typically represent the most efficient route for fluid transfer and straight pipes can be relatively straightforward to manufacture in large quantities.

However, in some fluid transfer routes bends are unavoidable, e.g. to avoid other intervening structures. For instance, in an aircraft wing, fuel may need to follow a path over or under other wing structures. Conventionally, fluid may be transferred along bent paths by using angled connectors to join together straight lengths of pipe. However, this can require a complex arrangement of connectors, supports and seals and the associated cost, size and/or weight may be undesirable, especially in aerospace applications.

Manufacturing pipes with integral bends can mitigate the complexity of supporting and sealing fluid transfer structures. However, when pipes with bends are subject to internal pressures (e.g. when transporting fluids), the different surface areas of the intrados and extrados of the bend (i.e. the radially-inner and radially-outer portions of the bend) can produce a net force which encourages the bend to open out and the pipe to straighten. This is known as the Bourdon effect. This movement may necessitate the use of complex compliance systems to seal and support the pipe whilst tolerating pipe movement, potentially negating some or all of the benefits associated with using integral bends rather than connectors.

An improved approached may be desired.

JP H06 41935 U discloses a tube with an elbow that has an elliptical cross section. US 2016/131019 A1 discloses a hose with a non-circular cross-section in a 90° bend. "The Influence of the Bourdon Effect on Pipe Elbow", Volume 3: Operations, Monitoring and Maintenance; Materials and Joining, 2016 (Abdulhameed, Diana et al.) describes how pipes undergo "ovalization" to a non-circular cross section when they are bent. US 2007/227610 A1 discloses a multi-layer composite resin hose with multiple bends having non-circular cross sections. CA 3065263 discloses a circular fibre reinforced polymer pipe with bends.

### Summary

According to a first aspect of the present invention there is provided a pipe according to claim 1.

Thus, it will be recognised by those skilled in the art that undesirable movement of the pipe when transferring fluid at the operational pressure may be mitigated, because the cross-section of the pipe in the bend section (i.e. the shape of a slice through the pipe in a plane perpendicular to the extension of the pipe at that point of the pipe) acts to oppose the generation of unbalanced forces on the pipe due to the operational pressure.

Mitigating movement of the pipe may reduce stresses on the pipe and/or associated support structures when the pipe is in use, and may also mitigate long-term issues with the pipe and/or associated support structures due to cyclic loading as the pipe is pressurised and depressurised. As such, the pipe and/or associated support structures may be made smaller and/or lighter whilst still providing a desired performance level. Furthermore, reducing or even effectively eliminating pipe movement may simplify fluid connection requirements for the pipe. For instance, a fluid connector for the pipe (e.g. a tubular connector housing an O-ring seal between the pipe and the connector) may need to accommodate less pipe movement whilst maintaining the connection, allowing the connector to be made simpler, smaller and/or lighter.

The first portion may comprise a first end of the pipe. The second portion may comprise a second end of the pipe. It may be particularly useful to resist relative movement of the ends of the pipe because this is where the pipe is typically connected to other components (e.g. other fluid pipes). However, in some examples the first and/or second portion is away from an end of the pipe, e.g. an intermediate or middle portion of the pipe. It may still be important to minimise pipe movement away from the ends, e.g. to reduce internal pipe stresses, to mitigate the pipe colliding with other structures and/or to reduce loads on structures supporting the pipe away from the ends.

The inventors have recognised that suitable selection of the cross section in the bend portion can mitigate deformations in the shape of the pipe caused by fluid pressure. The non-circular cross section suitable for resisting relative movement may vary depending on the particular profile of the bend portion alongside other characteristics such as the pipe dimensions, pipe material and/or operational pressure. The non-circular cross section may also vary depending on mechanical constraints on the pipe (e.g. applied by connectors or other supporting structures).

As explained above, different surface areas on the intrados and extrados faces of a bend can produce a net force which encourages the bend to open out and straighten. However, if the longest axis of the cross section in the bend portion is aligned with the bend, this may act to resist the generation of imbalanced forces from different surface areas because the operational pressure will urge the cross section towards a circular shape. This produces an net inward force on the walls of the pipe aligned with the bend and thus acting against the action of imbalanced forces on the intrados and extrados, resisting deformation of the bend portion.

In a set of examples, the non-circular cross section comprises an ellipse. In some such examples a major axis of the ellipse (i.e. the longest axis of the ellipse) lies in a plane defined by the first and second directions.

The non-circular cross section in the bend portion may be described as having an aspect ratio, defined as the ratio of the length of the longest axis of the cross section to the length of the longest straight line that can be drawn between points of the cross section whilst being perpendicular to the longest axis. In a set of examples, the non-circular cross section in the bend portion has an aspect ratio that is greater than one. For instance, where the non-circular cross section is an ellipse, the aspect ratio is the ratio between the lengths of the major and minor axes. In some examples, the aspect ratio of the non-circular cross section is 1.05 or more, 1.1 or more, 1.5 or more or even 2 or more.

In a set of examples, the bend portion is integral with the first and second portions of the pipe, e.g. the first, second and bend portions are formed from a single piece of material. In other words, the pipe may comprise a monolithic structure containing the first portion, the second portion and the bend portion. The first portion, the second portion and the bend portion may be formed by removing material from a single workpiece (e.g. machining from a single price of metal), or by an additive manufacturing process (e.g. moulding from fibre-reinforced polymer).

The pipe may be formed from a metal such as aluminium. However, in a set of examples the pipe comprises fibre-reinforced polymer (FRP). For instance, the pipe may comprise fibre reinforcement (e.g. as glass fibres, carbon fibres or aramid fibres) in a polymer matrix such as a thermoplastic resin (e.g. polyphenylene sulfide (PPS), polyether ether ketone (PEEK), polyetherketoneketone (PEKK), polyetherketone (PEK) or another polymer that is part of the polyaryletherketone (PAEK) family) or a thermosetting resin (e.g. an epoxy resin or a phenolic resin). In some examples where the pipe comprises a fibre-reinforced polymer structure, continuous fibre reinforcement extends from the first portion into the bend portion and/or from the bend portion into the second portion. The use of FRP may provide the pipe with excellent strength properties relative to its weight, and facilitate the use of additive manufacturing techniques (e.g. filament winding using a suitably-shaped mandrel) to reduce wasted material during manufacture (i.e. to provide a lower buy-to-fly ratio).

Preferably, the internal operational pressure at which the pipe is arranged to operate is greater than atmospheric pressure (i.e. the likely pressure outside the pipe), although the use of the non-circular cross section in the bend portion may also provide benefits where the internal operational pressure at which the pipe is arranged to operate is less than an external atmospheric pressure. In a set of examples, the internal operational pressure at which the pipe is arranged to operate is 0.2 MPa or more, 0.5 MPa or more, 1 MPa or more, or 2 MPa or more. It will be appreciated that the shape of the non-circular cross section may be somewhat dependent on the operational pressure for which the component is designed, as the magnitude of the Bourdon effect due to the bend (and thus the amount of compensation required with the non-circular cross section) depends on the pressure.

The pipe may transition continuously to and/or from the non-circular cross section in the bend portion. In other words, there may be substantially no sudden or discrete changes in pipe cross section in the bend portion (or indeed elsewhere in the pipe), to avoid generating localised stresses.

In some examples, the bend portion directly connects the first portion to the second portion. In some such examples, the first portion may comprise a straight portion extending in the first direction and/or the second portion may comprise a straight portion extending in the second direction. Alternatively, there may be one or more intervening portions (bends or otherwise) between the first portion and the bend portion and/or the bend portion and the second portion. In other words, there may be several bends overall between the first and second portions. The bend portion may form part of a larger bend, i.e. where the first and/or second direction is a tangent of a larger bend in the pipe.

The third direction may be the same as the first direction.

The options above described with reference to the (first) non-circular cross section may equally be applicable to the second non-circular cross section. For instance, the second non-circular cross section may be an elliptical cross section.

As mentioned above, the first bend portion may form part of a larger bend, e.g. where the second bend portion extends directly from the first bend portion. It may be beneficial for the pipe to have a changing cross section through a larger bend, e.g. due to changes in curvature and/or direction of the bend. Alternatively, the first bend portion may be separated from the second bend portion, e.g. by a straight portion. More generally, as mentioned above, there may be several bends overall between the first and second portions.

In examples comprising first and second bend portions with first and second non-circular cross sections, the non-circular cross sections may be selected to resist movement (e.g. opening or closing) of their respective bend portion (i.e. where the first non-circular cross section is selected to resist movement of the first bend portion and the second non-circular cross section is selected to resist movement of the first bend portion), so as to resist overall relative movement of the first and second portions when the pipe is subject to the operational pressure. However, in some pipes with a plurality of bends it may not be essential for all pipe movement to be mitigated as long as relative movement between particular portions of the pipe (e.g. its ends) is mitigated. As such, in some examples the first and second non-circular cross sections are selected such to resist overall relative movement of the first and second portions, whilst not necessarily resisting movement of their respective bend portions. For instance, some movement of the first and second bend portions may be permitted so long as these substantially cancel so as to produce little or no relative movement of the first and second portions.

The pipe may comprise a substantially constant cross-sectional area in the first, second and bend portions. In other words, the pipe may have a relatively constant size. However, it may be acceptable for the cross-sectional area in the bend portion to be slightly different from that in the first and/or second portions due to the non-circular cross section. Alternatively, the pipe may comprise a different cross-sectional areas in the first, second and/or bend portions.

When viewed from a second aspect of the present invention there is provided a pipe system comprising the pipe disclosed herein and at least one other structure to which the pipe is connected. The non-circular cross section may be selected taking into account one or more mechanical constraints imposed by the connection to the at least one other structure.

The at least one other structure may comprise a second pipe. In such examples, the (first) pipe and the second pipe may be in fluid communication. The pipe system may comprise a sealing arrangement to seal the connection between the first and second pipe. For instance, the pipe system may comprise an O-ring seal between the first and second pipes.

In a set of examples, the at least one other structure comprises a support structure (e.g. an aircraft wing rib). The support structure may be arranged to provide mechanical support to the pipe, e.g. comprising a clip arranged to connect a middle portion of the pipe to another structure. The support structure may also provide sealing to the pipe. For instance, the support structure may comprise a flanged connector arranged to support an end of the pipe and seal a fluid connection to or from the pipe. For instance, the pipe system may include an O-ring seal between the pipe and the support structure.

As mentioned above, the pipe disclosed herein and/or associated components may be made smaller and lighter than conventional approaches may allow. This may be particularly beneficial in aerospace applications where minimising size and weight are particularly important. In a set of examples, the pipe comprises a fuel pipe, such as an aircraft fuel pipe. The pipe of the present disclosure may be particularly suited for use as an aircraft fuel pipe because these must often follow complex bent paths in an aircraft wing around one or more wing structures (e.g. wing ribs or spars). The disclosure thus extends to an aircraft comprising a pipe as disclosed herein. In some examples the aircraft comprises one or more other structures (e.g. internal wing structures), and the bend portion of the pipe diverts the pipe around said one or more structures.

When viewed from a third aspect of the present invention there is provided a method of manufacturing a pipe according to claim 12.

Features of any aspect or example described herein may, wherever appropriate, be applied to any other aspect or example described herein. Where reference is made to different examples, it should be understood that these are not necessarily distinct but may overlap. It will be appreciated that all of the preferred features of the pipe according to the first aspect described above may also apply to the other aspects of the disclosure.

### Detailed Description

One or more non-limiting examples will now be described, by way of example only, and with reference to the accompanying figures in which:
Figure 1 is a schematic view of an aircraft with a fuel pipe according to an unclaimed example;
Figure 2 is a more detailed schematic view of the pipe shown in Figure 1;
Figure 3 is a cross section of the pipe shown in Figure 2, taken at the point F3;
Figure 4 is a cross section of the pipe shown in Figure 2, taken at the point F4;
Figure 5 is a schematic view of a pipe according to an example of the present disclosure;
Figure 6 is a cross section of the pipe shown in Figure 5, taken at the point F6;
Figure 7 is a cross section of the pipe shown in Figure 5, taken at the point F7; and
Figure 8 is a cross section of the pipe shown in Figure 5, taken at the point F8.

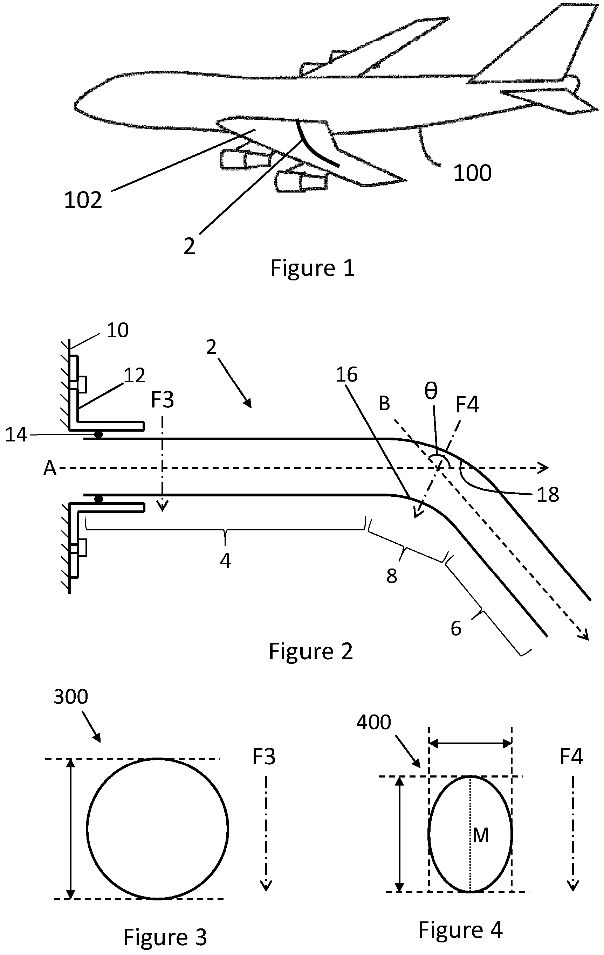

Figure 1 shows an aircraft 100 comprising a wing 102 and a fuel pipe system 200 inside said wing arranged to transfer fuel around the aircraft 100.

The pipe system 200 is shown in more detail in Figure 2. The pipe system 200 comprises a pipe 2 having first straight portion 4 which extends in a first direction A (i.e. the pipe walls extend parallel to the first direction A), a second straight portion 6 which extends in a second direction B and a bend portion 8 joining the first and second straight portions 4, 6. The first and second directions A, B intersect with an angle θ. Although not shown in Figure 2, the ends of the pipe 2 are in fluid communication with other elements of the fuel system in the aircraft 100 (e.g. further fuel pipes, a fuel tank or a fuel pump)

In the first straight portion 4, the pipe 2 has a circular cross section 300 in a plane perpendicular to the extension of the pipe (i.e. perpendicular to the first direction A). This is shown in Figure 3, which is a cross section of the pipe 2 in the plane indicated by the label F3 in Figure 2. In the middle of the bend portion 8, the pipe 2 has an elliptical cross section 400 in a plane perpendicular to the extension of the pipe (i.e. perpendicular to a direction between the first and second directions A, B). This is shown in Figure 4, which is a cross section of the pipe 2 in the plane indicated by the label F4 in Figure 2. The elliptical cross section has a major axis M which extends in the plane defined by the first and second directions A, B, so that the width of the pipe 2 in the bend portion 8 is less than its height. The pipe 2 transitions continuously from the circular cross section 300 to the elliptical cross section 400 (i.e. there isn't a step-change in the cross section), but has predominantly the elliptical cross section 400 shown in Figure 4 throughout the bend portion 8.

The pipe system 200 comprises a flanged connector 12 that connects one end of the pipe 2 to a structure 10 (e.g. a rib of the aircraft wing 102). The pipe 2 floats on an O-ring 14 inside the connector 12, which seals the connection and tolerates some movement of the pipe 2 relative to the structure 10 in use (e.g. as the wing 102 moves in flight).

The pipe 2 is arranged to transfer fuel at a operational pressure (e.g. 3 bar). Because the radially-inner inside surface 16 (intrados) of the bend portion 8has a smaller area than the radially-outer inside surface 18 (extrados), the pressure inside the pipe 2 exerts a larger force on the radially-outer inside surface 18 than the radially-inner inside surface 16. This difference in forces would, in the absence of any mitigation, be transferred into the walls of the pipe 2 and urge the bend portion 8 to "open up", and the pipe 2 to straighten out. This is known as the Bourdon effect. Such movement is undesirable because it could necessitate the use of more tolerant and/or stronger connections to ensure that the pipe 2 is reliably sealed and connected the rest of the aircraft wing 102. For instance, the connector 12 could need to be longer and/or stiffer to handle increased axial and lateral movements of the pipe 2. The forces generated by the internal pressure would also generate undesirable stresses in the pipe 2 itself, possibly necessitating the use of additional material to strengthen the pipe 2.

However, because the pipe 2 has an elliptical cross section 400 in the bend portion 8, this movement is opposed by the pressure in the pipe 2 also acting to urge the elliptical cross section 400 into a circular shape. The internal pressure urges the sections of the pipe 2 at the ends of the major axis M of the ellipse (i.e. the widest points of the ellipse) towards each other and the sections at the narrowest points (i.e. at the ends of the minor axis) away from each other. This acts to oppose the forces described above and thus resist relative movement of the first and second straight portions 4, 6. The size and weight of the pipe 2 and connector 12 can therefore be reduced.

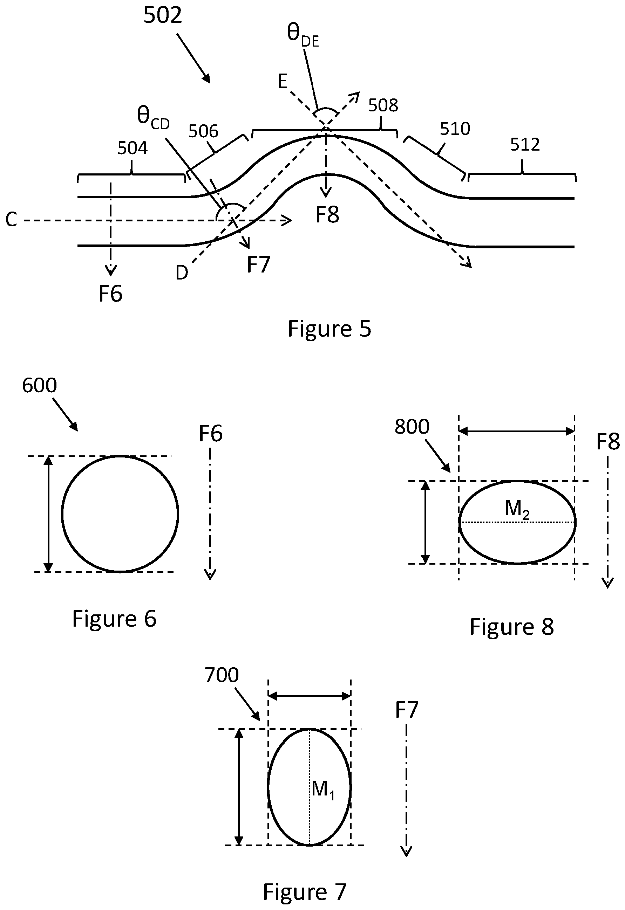

Figure 5 shows another pipe 502 comprising a first straight portion 504 which extends in a first direction C, a first bend portion 506 in which the pipe 502 transitions to extend in a second direction D, a second bend portion 508 in which the pipe transitions to extend in a third direction E, and a third bend portion 510 in which the pipe transitions to a second straight portion 512 which once again extends in the first direction C. The first and second directions C, D intersect with an angle θ_{CD}, and the second and third directions D, E intersect with an angle θ_{DE}.

In use, the pipe 502 transfers fluid (e.g. fuel) at an operational pressure. In the absence of any mitigation, this pressure would result in uneven forces on the walls of the bend portions 506, 508, 510, causing the bends to deform and the first and second straight portions 504, 512 to move relative to each other.

However, to resist this movement the pipe 502 has an elliptical cross section in the bend portions 506, 508, 510. In the first and second straight portions 504, 512, the pipe 502 has a circular cross section 600 (shown in Figure 6, which is a cross section of the pipe 502 in the plane indicated by the label F6 in Figure 5). In the first and third bend portions 506, 510, the pipe 502 has a first elliptical cross section 700 (shown in Figure 7, which is a cross section of the pipe 502 in the plane indicated by the label F7 in Figure 5). In the second bend portion 508, the pipe 502 has a second elliptical cross section 800 (shown in Figure 8, which is a cross section of the pipe 502 in the plane indicated by the label F8 in Figure 5).

The first elliptical cross section 700 has a major axis M₁ which extends in the plane defined by the first and second directions C, D. The second elliptical cross section 800 has a major axis M₂ which extends perpendicular to the plane defined by the second and third directions D, E. The cross section of the pipe 502 transitions gently between the various different portions of the pipe 502.

As explained above, fluid at an operational pressure in the pipe 502 would, without mitigation, generate imbalanced forces on the walls of the pipe 502 in the bend portions 506, 508, 510, leading to relative movement of the first and second straight portions 504, 512 and increased sealing and support requirements. However, the first and second elliptical cross sections 700, 800 act to resist the relative movement of the first and second straight portions 504, 512 by opposing the generation of imbalanced forces in the bends. It will be appreciated that each of the elliptical cross sections 700, 800 does not necessarily resist directly the Bourdon effect in the bend it which it is located but rather the net effect of all of the cross sections in the pipe is to resist relative movement of the first and second straight portions 504, 512.

Pipe movement due to an internal operational fluid pressure may thus be mitigated or entirely eliminated by suitable selection of the cross sections along the pipe 502, reducing sealing and support requirements and the associated size and weight implications.

While the disclosure has been described in detail in connection with only a limited number of examples, it should be readily understood that the disclosure is not limited to such disclosed examples. Rather, the disclosure can be modified to incorporate any number of variations, alterations, substitutions or equivalent arrangements not heretofore described, but which are commensurate with the scope of the disclosure. Additionally, while various examples of the disclosure have been described, it is to be understood that aspects of the disclosure may include only some of the described examples. Accordingly, the invention is not to be seen as limited by the foregoing description, but is only limited by the scope of the appended claims.

## Claims

1. A pipe (502) extending from a first portion (504) to a second portion (512) and arranged to transfer fluid at an operational pressure from the first portion (504) to the second portion (512);
wherein the pipe (502) comprises a first bend portion (506) between the first and second portions (504, 512) in which the pipe (502) transitions from extending in a first direction (C) to extending in a second direction (D), and a second bend portion (508) between the first and second portions (504, 512), in which the pipe (502) transitions from extending in the second direction (D) to extending in a third direction (E); and
wherein the first bend portion (506) of the pipe comprises a first non-circular cross section (700) and the second bend portion (508) comprises a second, different, non-circular cross section (800), the first and second non-circular cross sections (700, 800) having shapes selected to resist relative movement of the first and second portions (504, 512) when the pipe is subject to the operational pressure; **characterized in that**
the first non-circular cross section (700) has a longest axis which lies in a plane defined by the first and second directions (C, D); and
the second non-circular cross section (800) has a longest axis which lies perpendicular to a plane defined by the second and third directions (D, E).

2. The pipe (502) as claimed in any preceding claim, wherein the first non-circular cross section (700) comprises an ellipse.

3. The pipe (502) as claimed in any preceding claim, wherein the first non-circular cross section (700) has an aspect ratio of 1.5 or more.

4. The pipe (502) as claimed in any preceding claim, wherein the first bend portion (506) is integral with the first and second portions (504, 512).

5. The pipe (502) as claimed in any preceding claim, wherein the pipe (502) comprises fibre-reinforced polymer.

6. The pipe (502) as claimed in claim 5, wherein the pipe (502) comprises continuous fibre reinforcement that extends from the first portion (504) into the first bend portion (506) and/or from the first bend portion (506) into the second portion (512).

7. The pipe (502) as claimed in any preceding claim wherein the internal operational pressure at which the pipe (502) is arranged to operate is 0.5 MPa or more.

8. A pipe system comprising the pipe (502) as claimed in any preceding claim and at least one other structure (10) to which the pipe (502) is connected.

9. The pipe system of claim 8, wherein the first non-circular cross section of the first bend portion of the pipe (502) is selected taking into account one or more mechanical constraints imposed by a connection to the at least one other structure (10).

10. The pipe system of claim 8 or 9, wherein the at least one other structure comprises a second pipe or a support structure (10).

11. An aircraft (100) comprising a pipe (502) as claimed in any of claims 1-7 and one or more other structures, wherein the first bend portion of the pipe (502) diverts the pipe (502) around said one or more structures.

12. A method of manufacturing a pipe (502) extending from a first portion (504) to a second portion (512) and arranged to transfer fluid at an operational pressure from the first portion (504) to the second portion (512), the method comprising:
forming a pipe (502) comprising a first portion (504), a second portion (512), a first bend portion (506) between the first and second portions (504, 512) in which the pipe (502) transitions from extending in a first direction (C) to extending in a second direction (D), and a second bend portion (508) between the first and second portions (504, 512), in which the pipe (502) transitions from extending in the second direction (D) to extending in a third direction (E);
wherein the first bend portion (506) of the pipe (502) comprises a first non-circular cross section (700) and the second bend portion (508) comprises a second, different, non-circular cross section (800), and wherein the method comprises selecting the shapes of the first and second non-circular cross sections (700, 800) to resist relative movement of the first and second portions (504, 512) when the pipe (502) is subject to the operational pressure;
wherein the first non-circular cross section (700) has a longest axis which lies in a plane defined by the first and second directions (C, D); and
the second non-circular cross section (800) has a longest axis which lies perpendicular to a plane defined by the second and third directions (D, E).

## Patentansprüche

1. Rohr (502), das sich von einem ersten Abschnitt (504) zu einem zweiten Abschnitt (512) erstreckt und zum Übertragen von Fluid unter einem Betriebsdruck von dem ersten Abschnitt (504) zu dem zweiten Abschnitt (512) angeordnet ist;
wobei das Rohr (502) einen ersten Bogenabschnitt (506) zwischen dem ersten und zweiten Abschnitt (504, 512), in dem das Rohr (502) vom Erstrecken in eine erste Richtung (C) zum Erstrecken in eine zweite Richtung (D) übergeht, und einen zweiten Bogenabschnitt (508) zwischen dem ersten und zweiten Abschnitt (504, 512) umfasst, in dem das Rohr (502) vom Erstrecken in die zweite Richtung (D) zum Erstrecken in eine dritte Richtung (E) übergeht; und
wobei der erste Bogenabschnitt (506) des Rohrs einen ersten nicht kreisförmigen Querschnitt (700) umfasst und der zweite Bogenabschnitt (508) einen zweiten, anderen, nicht kreisförmigen Querschnitt (800) umfasst, wobei der erste und zweite nicht kreisförmige Querschnitt (700, 800) Formen aufweisen, die derart ausgewählt sind, dass sie einer relativen Bewegung des ersten und zweiten Abschnitts (504, 512) widerstehen, wenn das Rohr dem Betriebsdruck ausgesetzt ist; **dadurch gekennzeichnet, dass**
der erste nicht kreisförmige Querschnitt (700) eine längste Achse aufweist, die in einer durch die erste und zweite Richtung (C, D) definierten Ebene liegt; und
der zweite nicht kreisförmige Querschnitt (800) eine längste Achse aufweist, die senkrecht zu einer durch die zweite und dritte Richtung (D, E) definierten Ebene liegt.

2. Rohr (502) nach einem der vorhergehenden Ansprüche, wobei der erste nicht kreisförmige Querschnitt (700) eine Ellipse umfasst.

3. Rohr (502) nach einem der vorhergehenden Ansprüche, wobei der erste nicht kreisförmige Querschnitt (700) ein Geometrieverhältnis von 1,5 oder mehr aufweist.

4. Rohr (502) nach einem der vorhergehenden Ansprüche, wobei der erste Bogenabschnitt (506) einstückig mit dem ersten und zweiten Abschnitt (504, 512) ist.

5. Rohr (502) nach einem der vorhergehenden Ansprüche, wobei das Rohr (502) faserverstärktes Polymer umfasst.

6. Rohr (502) nach Anspruch 5, wobei das Rohr (502) eine Endlosfaserverstärkung umfasst, die sich von dem ersten Abschnitt (504) in den ersten Bogenabschnitt (506) und/oder von dem ersten Bogenabschnitt (506) in den zweiten Abschnitt (512) erstreckt.

7. Rohr (502) nach einem der vorhergehenden Ansprüche, wobei der Innenbetriebsdruck, mit dem das Rohr (502) zum Betreiben angeordnet ist, 0,5 MPa oder mehr beträgt.

8. Rohrsystem, umfassend das Rohr (502) nach einem der vorhergehenden Ansprüche und mindestens eine andere Konstruktion (10), mit der das Rohr (502) verbunden ist.

9. Rohrsystem nach Anspruch 8, wobei der erste nicht kreisförmige Querschnitt des ersten Bogenabschnitts des Rohrs (502) unter Berücksichtigung einer oder mehrerer mechanischer Einschränkungen ausgewählt ist, die durch eine Verbindung mit der mindestens einen anderen Konstruktion (10) auferlegt sind.

10. Rohrsystem nach Anspruch 8 oder 9, wobei die mindestens eine andere Konstruktion ein zweites Rohr oder eine Stützkonstruktion (10) umfasst.

11. Luftfahrzeug (100), umfassend ein Rohr (502) nach einem der Ansprüche 1 bis 7 und eine oder mehrere andere Konstruktionen, wobei der erste Bogenabschnitt des Rohrs (502) das Rohr (502) um die eine oder mehreren Konstruktionen führt.

12. Verfahren zum Herstellen eines Rohrs (502), das sich von einem ersten Abschnitt (504) zu einem zweiten Abschnitt (512) erstreckt und zum Übertragen von Fluid unter einem Betriebsdruck von dem ersten Abschnitt (504) zu dem zweiten Abschnitt (512) angeordnet ist, wobei das Verfahren Folgendes umfasst:
Ausbilden eines Rohrs (502), umfassend einen ersten Abschnitt (504) und einen zweiten Abschnitt (512), einen ersten Bogenabschnitt (506) zwischen dem ersten und zweiten Abschnitt (504, 512), in dem das Rohr (502) vom Erstrecken in eine erste Richtung (C) zum Erstrecken in eine zweite Richtung (D) übergeht, und einen zweiten Bogenabschnitt (508) zwischen dem ersten und zweiten Abschnitt (504, 512), in dem das Rohr (502) vom Erstrecken in die zweite Richtung (D) zum Erstrecken in eine dritte Richtung (E) übergeht;
wobei der erste Bogenabschnitt (506) des Rohrs (502) einen ersten nicht kreisförmigen Querschnitt (700) umfasst und der zweite Bogenabschnitt (508) einen zweiten, anderen, nicht kreisförmigen Querschnitt (800) umfasst und wobei das Verfahren Auswählen der Formen des ersten und zweiten nicht kreisförmigen Querschnitts (700, 800) derart umfasst, dass sie einer relativen Bewegung des ersten und zweiten Abschnitts (504, 512) widerstehen, wenn das Rohr (502) dem Betriebsdruck ausgesetzt ist;
wobei der erste nicht kreisförmige Querschnitt (700) eine längste Achse aufweist, die in einer durch die erste und zweite Richtung (C, D) definierten Ebene liegt; und
der zweite nicht kreisförmige Querschnitt (800) eine längste Achse aufweist, die senkrecht zu einer durch die zweite und dritte Richtung (D, E) definierten Ebene liegt.

## Revendications

1. Tuyau (502) se prolongeant d'une première partie (504) à une seconde partie (512) et agencé pour transférer un fluide à une pression de fonctionnement de la première partie (504) à la seconde partie (512) ;
dans lequel le tuyau (502) comprend une première partie courbée (506) entre les première et seconde parties (504, 512) dans laquelle le tuyau (502) passe d'un prolongement dans une première direction (C) à un prolongement dans une deuxième direction (D), et une seconde partie courbée (508) entre les première et seconde parties (504, 512), dans laquelle le tuyau (502) passe d'un prolongement dans la deuxième direction (D) à un prolongement dans une troisième direction (E) ; et
dans lequel la première partie courbée (506) du tuyau comprend une première section transversale non circulaire (700) et la seconde partie courbée (508) comprend une seconde section transversale non circulaire (800) différente, les première et seconde sections transversales non circulaires (700, 800) ayant des formes sélectionnées pour résister au mouvement relatif des première et seconde parties (504, 512) lorsque le tuyau est soumis à la pression de fonctionnement ; **caractérisé en ce que** la première section transversale non circulaire (700) a un axe le plus long qui se trouve dans un plan défini par les première et deuxième directions (C, D) ; et
la seconde section transversale non circulaire (800) a un axe le plus long qui est perpendiculaire à un plan défini par les deuxième et troisième directions (D, E).

2. Tuyau (502) selon une quelconque revendication précédente, dans lequel la première section transversale non circulaire (700) comprend une ellipse.

3. Tuyau (502) selon une quelconque revendication précédente, dans lequel la première section transversale non circulaire (700) a un rapport d'aspect de 1,5 ou plus.

4. Tuyau (502) selon une quelconque revendication précédente, dans lequel la première partie courbée (506) est solidaire des première et seconde parties (504, 512).

5. Tuyau (502) selon une quelconque revendication précédente, dans lequel le tuyau (502) comprend un polymère renforcé de fibres.

6. Tuyau (502) selon la revendication 5, dans lequel le tuyau (502) comprend un renfort en fibres continues qui se prolonge de la première partie (504) dans la première partie courbée (506) et/ou de la première partie courbée (506) dans la seconde partie (512).

7. Tuyau (502) selon une quelconque revendication précédente, dans lequel la pression de fonctionnement interne à laquelle le tuyau (502) est agencé pour fonctionner est de 0,5 MPa ou plus.

8. Système de tuyau comprenant le tuyau (502) selon une quelconque revendication précédente et au moins une autre structure (10) à laquelle le tuyau (502) est relié.

9. Système de tuyau selon la revendication 8, dans lequel la première section transversale non circulaire de la première partie courbée du tuyau (502) est sélectionnée en tenant compte d'une ou plusieurs contraintes mécaniques imposées par une liaison à l'au moins une autre structure (10).

10. Système de tuyau selon la revendication 8 ou 9, dans lequel l'au moins une autre structure comprend un second tuyau ou une structure de support (10).

11. Aéronef (100) comprenant un tuyau (502) selon l'une quelconque des revendications 1 à 7 et une ou plusieurs autres structures, dans lequel la première partie courbée du tuyau (502) dévie le tuyau (502) autour desdites une ou plusieurs structures.

12. Méthode de fabrication d'un tuyau (502) se prolongeant d'une première partie (504) à une seconde partie (512) et agencé pour transférer un fluide à une pression de fonctionnement de la première partie (504) à la seconde partie (512), la méthode comprenant :
la formation d'un tuyau (502) comprenant une première partie (504), une seconde partie (512), une première partie courbée (506) entre les première et seconde parties (504, 512) dans laquelle le tuyau (502) passe d'un prolongement dans une première direction (C) à un prolongement dans une deuxième direction (D), et une seconde partie courbée (508) entre les première et seconde parties (504, 512), dans laquelle le tuyau (502) passe d'un prolongement dans la deuxième direction (D) à un prolongement dans une troisième direction (E) ;
dans laquelle la première partie courbée (506) du tuyau (502) comprend une première section transversale non circulaire (700) et la seconde partie courbée (508) comprend une seconde section transversale non circulaire (800) différente, et dans laquelle la méthode comprend la sélection des formes des première et seconde sections transversales non circulaires (700, 800) pour résister au mouvement relatif des première et seconde parties (504, 512) lorsque le tuyau (502) est soumis à la pression de fonctionnement ;
dans laquelle la première section transversale non circulaire (700) a un axe le plus long qui se trouve dans un plan défini par les première et deuxième directions (C, D) ; et
la seconde section transversale non circulaire (800) a un axe le plus long qui est perpendiculaire à un plan défini par les deuxième et troisième directions (D, E).
